Europäisches Patentamt

European Patent Office

Office européen des brevets

(19)

(11) Veröffentlichungsnummer : **0 484 273 A1**

# (12) EUROPÄISCHE PATENTANMELDUNG

(21) Anmeldenummer : **91810769.9**

(22) Anmeldetag : **01.10.91**

(51) Int. Cl.⁵ : **C08L 81/02, // (C08L81/02, 63:00, 23:08)**

(30) Priorität : **08.10.90 CH 3235/90**

(43) Veröffentlichungstag der Anmeldung :
**06.05.92 Patentblatt 92/19**

(84) Benannte Vertragsstaaten :
**CH DE FR GB IT LI NL**

(71) Anmelder : **CIBA-GEIGY AG**
**Klybeckstrasse 141**
**CH-4002 Basel (CH)**

(72) Erfinder : **Breitenfellner, Franz, Dr.**
**Konrad-Adenauer-Strasse 56**
**W-6140 Bensheim 1 (DE)**
Erfinder : **Hettrich, Gernot, Dr.**
**Hirschhorner Strasse 1**
**W-6148 Heppenheim (DE)**

(54) **Polyarylensulfidzusammensetzungen.**

(57)      Zusammensetzungen enthaltend
A) mindestens ein Polyarylensulfid mit einem Schmelzindex von kleiner als 1000 g/10 Minuten und
B) mindestens ein Terpolymer mit einer Zusammensetzung von
94 bis 60 Gew. % Ethylen,
5 bis 25 Gew. % eines $C_2$-$C_{10}$-Alkylacrylates oder -methacrylates und/oder $C_3$-$C_{10}$-Cycloalkylacrylat oder -methacrylates und
1 bis 15 Gew. % einer ungesättigte Epoxyverbindung,
die beispielsweise als Spritzgiessmassen verwendet werden können.

EP 0 484 273 A1

Die vorliegende Erfindung betrifft neue Polyarylensulfidzusammensetzungen mit verbesserter Zähigkeit in der Applikation und die Verwendung dieser Zusammensetzungen als Spritzgiessmassen.

Polyarylensulfide zeichnen sich durch hohe Festigkeit, hohe Wärmeformbeständigkeit, Flammwidrigkeit und gute Beständigkeit gegen Chemikalien aus, weshalb sie als interessante Konstruktionswerkstoffe gelten. Nachteile sind jedoch die relativ schlechten Zähigkeitseigenschaften und die Bruchempfindlichkeit.

In US-A 4,581,411 wird die Anhebung der Schlagzähigkeit von Polyarylensulfiden beispielsweise durch Zusatz von Silikonkautschuken, Ethylen-Propylenkautschuken und Ethylen-Acrylsäurekautschuken beschrieben.

In der DE-A 36 16 131 wird die Verbesserung der Schlagzähigkeit und/oder Rissbeständigkeit von Polyarylensulfiden durch Zusatz von bestimmten Acrylatpfropfcopolymeren bei gleichzeitiger Anhebung der Fliessfähigkeit und Phasenverträglichkeit beschrieben.

In JP-A 62-151 460 werden Copolymere aus $\alpha,\beta$-ungesättigten Alkylcarboxylat-, Ethylen- und Maleinsäureanhydrid-Einheiten beschrieben, die sich zur Modifizierung von Polyarylensulfiden einsetzen lassen.

Die so modifizierten Polyarylensulfid-Massen genügen jedoch nicht in jeder Beziehung den heute gestellten hohen Anforderungen an thermoplastische Werkstoffe.

Es wurde nun überraschend gefunden, dass durch die Verwendung bestimmter Terpolymere in Polyarylensulfidzusammensetzungen die Zähigkeit verbessert und die Bruchanfälligkeit reduziert werden kann, ohne die übrigen Eigenschaften der Polyarylensulfide wesentlich zu beeinflussen.

Gegenstand der vorliegenden Erfindung sind somit Zusammensetzungen enthaltend

A) mindestens ein Polyarylensulfid mit einem Schmelzindex von kleiner als 1000 g/10 Minuten und

B) mindestens ein Terpolymer mit einer Zusammensetzung von

94 bis 60 Gew. % Ethylen,

5 bis 25 Gew. % eines $C_2$-$C_{10}$-Alkylacrylates oder -methacrylates und/oder $C_3$-$C_{10}$-Cycloalkylacrylates oder -methacrylates und

1 bis 15 Gew. % einer ungesättigten Epoxyverbindung.

Für die Zwecke der Erfindung kann jedes lineare oder nach dem Curing-Verfahren hergestellte Polyphenylensulfid (PPS) eingesetzt werden. Die erfindungsgemäss zu verwendenden PPS bestehen ganz oder im wesentlichen aus p-Phenylensulfid-Einheiten, doch können die Polyphenylensulfide auch, etwa bis zu 10 Mol-%, o-Phenylensulfid-Einheiten oder andere Arylensulfid-Einheiten, worin beispielsweise das Arylen ein alkylsubstituiertes Phenylen, eine p,p'-Diphenylensulfongruppe, eine p,p'-Diphenylenethergruppe, eine p,p'-Diphenylencarbonylgruppe, ein Biphenylen oder Naphthylen ist, enthalten.

Bekanntlich ist der Schmelzindex (Melt flow index = MFI) ein Mass für die Schmelzviskosität von Thermoplasten und somit auch für die erfindungsgemäss zu verwendenden PPS. Gemäss DIN 53 735 ist der Schmelzindex die Menge des Thermoplasten, die in 10 Minuten unter der Wirkung einer festgelegten Kraft durch eine genormte Düse ausgepresst wird. Je kleiner der Schmelzindex ist, um so grösser ist das Molekulargewicht des Thermoplasten. Der Schmelzindex der erfindungsgemäss zu verwendenden PPS wird bei 315 °C und einer Belastung von 5 kg bestimmt.

Bevorzugt sind Zusammensetzungen enthaltend als Komponente A ein Polyphenylensulfid mit einem Schmelzindex von 50 bis 800 g/10 Minuten.

Die erfindungsgemäss zu verwendenden PPS sind Polymere, deren Molekulargewicht durch Zufuhr ausreichender Energie, wie beispielsweise Wärme, bevorzugt in Gegenwart von Sauerstoff, erhöht werden kann, entweder durch Kettenverlängerung oder durch Vernetzen oder durch Kombination von beiden. Das Nachbehandlungsverfahren, durch das das Molekulargewicht der Polymeren erhöht wird, kann als Curing-Verfahren bezeichnet werden. Die Nachbehandlung der PPS wird in JMS-Rev. Macromol. Chem. Phys. C 29(1), 1989, Seite 97 ff, anhand von mehreren Verfahren näher beschrieben.

Bei den Terpolymeren gemäss Komponente B, die in den erfindungsgemässen Zusammensetzungen Verwendung finden, handelt es sich um Copolymere aus 1.) Ethylen, 2.) $C_2$-$C_{10}$-Alkylacrylate oder -methacrylate und/oder $C_3$-$C_{10}$-Cycloalkylacrylate oder -methacrylate und 3.) ungesättigte Epoxyverbindungen.

Alkylacrylate und -methacrylate sind beispielsweise Ethyl-, Propyl-, Butyl-, iso-Butyl-, Pentyl-, Hexyl-, Heptyl-, Octyl-, Nonyl- oder Decylacrylat und -methacrylat. Cycloalkylacrylate sind beispielsweise Cyclopropyl-, Cyclobutyl-, Cyclopentyl-, Methyl-cyclohexyl-, Cycloheptyl oder Cyclooctylacrylate und -methacrylate.

Beispielhaft für die ungesättigten Epoxyverbindungen, die zur Herstellung der Terpolymere gemäss Komponente B verwendet werden können, seien genannt:

– Ester und Ether von glycidylaliphatischen Verbindungen, wie Allylglycidylether, Vinylglycidylether, Glycidylmaleat oder -itaconat

– Ester und Ether von glycidylalicyclischen Verbindungen, wie 2-Cyclohexen- 1-glycidylether, Cyclohexen-4,5-diglycidylcarboxylat, 5-Norbonen-2-methyl-2-glycidylcarboxylat und endo-cis-Bicyclo[2,2,1]-5-hepten-2,3-diglycidyldicarboxylat.

Bevorzugt sind erfindungsgemässe Zusammensetzungen, in denen Komponente B $C_2$-$C_6$-Alkylacrylsäureester-Struktureinheiten enthält.

Besonders bevorzugt sind erfindungsgemässe Zusammensetzungen, in denen Komponente B Ethylacrylsäureester-Struktureinheiten enthält.

Weiterhin bevorzugt sind erfindungsgemässe Zusammensetzungen, in denen Komponente B Glycidylacrylat- und/oder Glycidylmethacrylat-Struktureinheiten enthält.

Insbesondere bevorzugt sind Zusammensetzungen, worin die Komponente B ein Ethylen-Acrylsäureethylester-Glycidylmethacrylat Terpolymer ist.

Terpolymere gemäss Komponente B, die in den erfindungsgemässen Zusammensetzungen Verwendung finden, sind bekannt und teilweise im Handel erhältlich (z.B. Lotader AX 8660 der Fa. Orkem).

Vorzugsweise enthalten die erfindungsgemässen Zusammensetzungen

99 bis 70 Gew.% einer Komponente A und

1 bis 30 Gew.% einer Komponente B,

bezogen auf die Gesamtmasse der Komponenten A und B.

Besonders bevorzugt sind erfindungsgemässe Zusammensetzungen enthaltend

98 bis 80 Gew.% einer Komponente A und

2 bis 20 Gew.% einer Komponente B,

bezogen auf die Gesamtmasse der Komponenten A und B.

Die erfindungsgemässen Zusammensetzungen können weiterhin

C) Füll- und/oder Verstärkungsmittel

enthalten.

Füll- und/oder Verstärkungsmittel, die in Polyarylensulfidmassen verwendet werden können, sind dem Fachmann allgemein bekannt. Beispiele für Füllstoffe sind Quarz, Talk, Glimmer oder Kaolin. Beispiele für Verstärkungsmittel sind Glas-, Kohle- oder Aramidfasern (z.B. Kevlar®).

Insbesondere bevorzugt sind erfindungsgemässe Zusammensetzungen, in denen die Komponente C Glasfasern enthält.

Vorzugsweise enthalten die erfindungsgemässen Zusammensetzungen

5 bis 65 Gew.% einer Komponente C,

bezogen auf die Gesamtmasse der Zusammensetzung.

Besonders bevorzugt sind erfindungsgemässe Zusammensetzungen enthaltend

30 bis 60 Gew.% einer Komponente C,

bezogen auf die Gesamtmasse der Zusammensetzung.

Weiterhin können die erfindungsgemässen Zusammensetzungen zusätzliche Additive wie z.B. Pigmente, Kristallkeimbildner, Verarbeitungshilfsmittel, wie Polyethylen, insbesondere Polyethylen hoher Dichte, ferner Lichtschutzmittel, Stabilisatoren und flammhemmende Zusätze zur weiteren Erhöhung der Flammwidrigkeit enthalten. Den erfindungsgemässen Zusammensetzungen werden üblicherweise auch Korrosionsinhibitoren, wie zum Beispiel Lithiumcarbonat oder Hydrotalcit ($Mg_{4,5}Al_2(OH)_{13}CO_3 \cdot 3,5\ H_2O$) zugesetzt.

Die erfindungsgemässen Zusammensetzungen können auch Haftvermittler wie Silane oder Titanate enthalten. Beispiele hierfür sind Epoxisilane wie 3-Glycidyloxypropyltrimethoxysilan, 3-Glycidyloxypropylmethyldiethoxysilan und 3-Glycidyloxypropyltriethoxysilan. Ebenso stellen Aminosilane oder Polysulfidorganosilane Beispiele für geeignete Haftvermittler dar.

Die Herstellung der erfindungsgemässen Zusammensetzungen kann auf an sich bekannte Weise mit handelsüblichen Mischgeräten durchgeführt werden. Als solche eignen sich beispielsweise Kneter, Einwellen- oder Zweiwellenextruder. Für die weitere Verarbeitung kann die erhaltene Mischung nach dem Erstarren der Schmelze granuliert werden.

Die aus den erfindungsgemässen Zusammensetzungen nach an und für sich bekannten Verfahren hergestellten Formkörper zeichnen sich insbesondere durch verbesserte Zähigkeitseigenschaften und verbesserte Bruchdehnung aus, während die Formbeständigkeit in der Wärme praktisch unbeeinflusst bleibt.

Gegenstand der vorliegenden Erfindung ist daher auch die Verwendung der erfindungsgemässen Zusammensetzungen als Spritzgiessmassen.

In den folgenden Beispielen sind einige bevorzugte Ausführungsformen der vorliegenden Erfindung beschrieben.

I. Herstellung der Formkörper

Mit Hilfe eines Labor-Kokneters mit 46 mm Schneckendurchmesser werden die in den Tabellen 1a bis 1c angeführten Komponenten bei einer Temperatur von 320-330 °C compoundiert und granuliert.

Nach einer Trocknung von 4 Stunden bei 140 °C erfolgt die Verarbeitung zu Spritzgiessformkörpern auf einer Schnecken-Spritzgiessmaschine Arburg-Allrounder Typ 270-210-500.

Die Herstellbedingungen der Probekörper betragen:

Zylinder-Temperatur: 300-315 °C

Werkzeug-Temperatur: 130 °C

Zykluszeit: 35 s

Tabelle 1a

| Zusammensetzung (Gew.%) Beispiel | 1 | 2 | 3 | 4 | 5 | 6 |
|---|---|---|---|---|---|---|
| PPS [1] | 58 | 56 | 53 | 50 | 47,64 | 41,64 |
| Terpolymer [2] | - | 3 | 6 | 9 | 12 | 18 |
| Additiv [3] | 1 | 1 | 1 | 1 | 0,24 | 0,24 |
| Hilfsmittel [4] | - | - | - | - | 0,12 | 0,12 |
| Glasfaser | 40 | 40 | 40 | 40 | 40 | 40 |

(1) Cured Polyphenylensulfid der Fa. Phillips Petroleum, MFI = 110 g/10 min (315°C) 5 kg

(2) Ethylen-Acrylsäureethylester-Glycidylmethacrylat Terpolymer, Lotader AX 8660 der Fa. Orkem

(3) $Mg_{4,5}Al_2(OH)_{13}CO_3 \cdot 3,5 H_2O$ (Hydrotalcit)

(4) Polyethylen hoher Dichte

EP 0 484 273 A1

Tabelle 1b

| Zusammensetzung (Gew.%) Beispiel | 7 | 8 | 9 | 10 | 11 |
|---|---|---|---|---|---|
| PPS [5] | 59,64 | 56,64 | 53,64 | 47,64 | 41,64 |
| Terpolymer [2] | - | 3 | 6 | 12 | 18 |
| Additiv [3] | 0,24 | 0,24 | 0,24 | 0,24 | 0,24 |
| Hilfsmittel [4] | 0,12 | 0,12 | 0,12 | 0,12 | 0,12 |
| Glasfaser | 40 | 40 | 40 | 40 | 40 |

(5) Lineares Polyphenylensulfid der Fa. Phillips Petroleum, MFI = 150 g/10 min (315°C) 5 kg

(2) Ethylen-Acrylsäureethylester-Glycidylmethacrylat Terpolymer, Lotader AX 8660 der Fa. Orkem

(3) $Mg_{4,5}Al_2(OH)_{13}CO_3 \cdot 3,5 H_2O$ (Hydrotalcit)

(4) Polyethylen hoher Dichte

Tabelle 1c

| Zusammensetzung (Gew.%) Beispiel | 12 | 13 | 14 | 15 | 16 | 17 |
|---|---|---|---|---|---|---|
| PPS [1] | 99,4 | - | 94,4 | 89,4 | - | - |
| PPS [5] | - | 99,4 | - | - | 94,4 | 89,4 |
| Terpolymer [2] | - | - | 5 | 10 | 5 | 10 |
| Additiv [3] | 0,4 | 0,4 | 0,4 | 0,4 | 0,4 | 0,4 |
| Hilfsmittel [4] | 0,2 | 0,2 | 0,2 | 0,2 | 0,2 | 0,2 |

(1) Cured Polyphenylensulfid der Fa. Phillips Petroleum, MFI = 110 g/10 min (315°C) 5 kg

(2) Ethylen-Acrylsäureethylester-Glycidylmethacrylat Terpolymer, Lotader AX 8660 der Fa. Orkem

(3) $Mg_{4,5}Al_2(OH)_{13}CO_3 \cdot 3,5 H_2O$ (Hydrotalcit)

(4) Polyethylen hoher Dichte

(5) Lineares Polyphenylensulfid der Fa. Phillips Petroleum, MFI = 150 g/10 min (315°C) 5 kg

5

II. Prüfung der technischen Eigenschaften

An den Formkörpern werden die in den Tabellen 2a bis 2c angeführten Eigenschaften gemessen. Man erkennt daraus, dass sich die erfindungsgemässen Probekörper mit einer Terpolymerkomponente (Beispiele 2-6, 8-11, 14-15 und 16-17) gegenüber dem jeweiligen Kontroll-Probekörper (ohne Terpolymerkomponente, Beispiele 1, 7, 12 und 13) auch ohne den Zusatz von Verstärkungsmitteln, wie Glasfasern, durch verbesserte Zähigkeitseigenschaften und verbesserte Bruchdehnung auszeichnen. Diese Wirkung ist sowohl bei linearem Polyphenylensulfid als auch bei gecuredtem Grundharz zu festzustellen. Durch den Glasfaserzusatz ist diese Tendenz ebenso gegeben. Die Wärmeformbeständigkeit bleibt hierbei ebenso praktisch unverändert. Weiterhin ist festzustellen, dass auch bei höheren Anteilen der Terpolymerkomponente diese verbessernde Wirkung erhalten wird.

Tabelle 2a

| Zusammensetzung gemäss Beispiel | 1 | 2 | 3 | 4 | 5 | 6 |
|---|---|---|---|---|---|---|
| Biegefestigkeit (N/mm$^2$) [1] | 218 | 223 | - | - | - | - |
| Bruchdehnung (%) [2] | 0,95 | 1,23 | 1,27 | 1,42 | 1,70 | 1,80 |
| Schlagzähigkeit (kJ/m$^2$) [3] | 14,4 | 19,7 | 19,6 | 19,7 | 21,4 | 21,7 |
| Wärmeformbeständigkeit [4] (°C) | 263 | 266 | 265 | 261 | 263 | 256 |

(1) DIN 53452      (2) DIN 53455      (3) DIN 53453      (4) ISO/R75 A

Tabelle 2b

| Zusammensetzung gemäss Beispiel | 7 | 8 | 9 | 10 | 11 |
|---|---|---|---|---|---|
| Biegefestigkeit (N/mm$^2$) [1] | 196 | 203 | 201 | 187 | 156 |
| Bruchdehnung (%) [2] | 1,4 | 1,6 | 1,7 | 2,0 | 2,9 |
| Schlagzähigkeit (kJ/m$^2$) [3] | 19,4 | 19,8 | 23,0 | 26,5 | 27,4 |
| Wärmeformbeständigkeit [5] (°C) | 261 | 257 | 260 | 252 | 250 |

(1) DIN 53452      (2) DIN 53455      (3) DIN 53453      (5) ISO/R75 B

Tabelle 2c

| Zusammensetzung gemäss Beispiel | 12 | 13 | 14 | 15 | 16 | 17 |
|---|---|---|---|---|---|---|
| Biegefestigkeit (N/mm$^2$) [1] | - | - | - | - | - | - |
| Bruchdehnung (%) [2] | - | - | - | - | - | - |
| Schlagzähigkeit (kJ/m$^2$) [3] | 4,9 | 10,1 | 8,5 | 11,4 | 16,6 | 26,3 |
| Wärmeformbeständigkeit [4] (°C) | 203 | 170 | 213 | 197 | 158 | 150 |

[1] DIN 53452          [2] DIN 53455          [3] DIN 53453          [4] ISO/R75 A

**Patentansprüche**

1. Zusammensetzungen enthaltend
   A) mindestens ein Polyarylensulfid mit einem Schmelzindex von kleiner als 1000 g/10 Minuten und
   B) mindestens ein Terpolymer mit einer Zusammensetzung von
      94 bis 60 Gew. % Ethylen,
      5 bis 25 Gew. % eines C$_2$-C$_{10}$-Alkylacrylates oder -methacrylates und/oder C$_3$-C$_{10}$-Cycloalkyla-crylates oder -methacrylates und
      1 bis 15 Gew. % einer ungesättigte Epoxyverbindung.

2. Zusammensetzungen gemäss Anspruch 1, dadurch gekennzeichet, dass sie als Komponente A ein Polyphenylensulfid mit einem Schmelzindex von 50 bis 800 g/10 Minuten enthalten.

3. Zusammensetzungen gemäss Anspruch 1, dadurch gekennzeichnet, dass die Komponente B C$_2$-C$_6$-Alky-lacrylsäureester-Struktureinheiten enthält.

4. Zusammensetzungen gemäss Anspruch 3, dadurch gekennzeichnet, dass die Komponente B Ethylacrylsäureester-Struktureinheiten enthält.

5. Zusammensetzungen gemäss Anspruch 1, dadurch gekennzeichnet, dass die Komponente B Glycidylacrylat- und/oder Glycidylmethacrylat-Struktureinheiten enthält.

6. Zusammensetzungen gemäss Anspruch 1, dadurch gekennzeichnet, dass die Komponente B ein Ethylen-Acrylsäureethylester-Glycidylmethacrylat Terpolymer ist.

7. Zusammensetzungen gemäss Anspruch 1 enthaltend
   99 bis 70 Gew.% einer Komponente A und
   1 bis 30 Gew.% einer Komponente B,
   bezogen auf die Gesamtmasse der Komponenten A und B.

8. Zusammensetzungen gemäss Anspruch 1 enthaltend
   98 bis 80 Gew.% einer Komponente A und
   2 bis 20 Gew.% einer Komponente B,
   bezogen auf die Gesamtmasse der Komponenten A und B.

9. Zusammensetzungen gemäss Anspruch 1 enthaltend
C) Füll- und/oder Verstärkungsmittel.

10. Zusammensetzungen gemäss Anspruch 9, dadurch gekennzeichnet, dass die Komponente C Glasfasern enthält.

11. Zusammensetzungen gemäss Anspruch 9 enthaltend
5 bis 65 Gew.% der Komponente C,
bezogen auf die Gesamtmasse der Zusammensetzung.

12. Zusammensetzungen gemäss Anspruch 9 enthaltend
30 bis 60 Gew.% der Komponente C,
bezogen auf die Gesamtmasse der Zusammensetzung.

13. Verwendung der Zusammensetzungen gemäss Anspruch 1 als Spritzgiessmassen.

EP 0 484 273 A1

Europäisches
Patentamt

**EUROPÄISCHER RECHERCHENBERICHT**

Nummer der Anmeldung

EP  91 81 0769

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 228 268  (TORAY INDUSTRIES) * Patentansprüche 1,6,7; Beispiel 1; Seite 10, Zeile 3 - Seite 11, Zeile 6; Patentanspruch 1; Seite 11, Zeile 11 - Seite 12, Zeile 22 * | 1-13 | C 08 L  81/02  // (C 08 L  81/02 C 08 L  63:00 C 08 L  23:08 ) |
| A | WORLD PATENTS INDEX LATEST, AN=84-305000 [49], Derwent Publications Ltd, London, GB; & JP-A-59 191 761 (SUMITOMO CHEMICAL) 30. Oktober 1984 * Zusammenfassung * | 1-13 | |
| A | WORLD PATENTS INDEX LATEST, AN=84-303752 [49], Derwent Publications Ltd, London, GB; & JP-A-59 189 166 (SUMITOMO CHEMICAL) 26. Oktober 1984 * Zusammenfassung * | 1-13 | |
| A | WORLD PATENTS INDEX LATEST, AN=86-71993, Derwent Publications Ltd, London, GB; & JP-A-61 021 156 (DAINIPPON INK) 29. Januar 1986 * Zusammenfassung * | 1-13 | **RECHERCHIERTE SACHGEBIETE (Int. Cl.5)** C 08 L |

Der vorliegende Recherchenbericht wurde für alle Patentansprüche erstellt

| Recherchenort | Abschlußdatum der Recherche | Prüfer |
|---|---|---|
| DEN HAAG | 27-01-1992 | KLIER E.K. |